# EUROPÄISCHE PATENTSCHRIFT

(11) **EP 0 599 442 B1**
(45) Veröffentlichungstag und Bekanntmachung des Hinweises auf die Patenterteilung: **08.03.2000**
(21) Anmeldenummer: 93250327.9
(22) Anmeldetag: 26.11.1993
(51) Int. Cl.: H04Q 1/10

(54) **Fernsprechnebenstellenanlage**
Private branch exchange
Central téléphonique privé

(30) Priorität: 26.11.1992 DE 9216486 U
(43) Veröffentlichungstag der Anmeldung: 01.06.1994
(73) Patentinhaber: ELMEG GmbH Kommunikationstechnik, D-31228 Peine (DE)
(72) Erfinder: Harderich, Wolfgang, D-31234 Edemissen (DE)
(74) Vertreter: Christiansen, Henning

(56) Entgegenhaltungen:
- DE-U- 9 209 860
- DE-U- 9 209 861
- DE-U- 9 216 486
- US-A- 4 747 018

## Beschreibung

Die Erfindung betrifft eine Fernsprechnebenstellenanlage, Wie sie aus DE-U-9 209 861 bekannt ist.

Bei einer derartigen kleinen Fernsprechnebenstellenanlage sind die Anschlußklemmen für die Leitungen und die elektrische Schaltung auf einer als Wandhalterung ausgebildeten Bodenplatte angebracht, wobei die Anschlußklemmen in einer Reihe angeordnet sind, die parallel und in geringem Abstand zu einer der Seitenkanten verläuft. Der Gehäusedeckel, der üblicherweise in Form eines offenen Quaders - gegegenenfalls mit Designelementen - ausgebildet ist, verschließt in aufgesetztem Zustand die Bodenplatte mit der elektrischen Schaltung und den Anschlußklemmen.

Bei der beschriebenen Anordnung sind bei aufgesetztem Gehäusedeckel - also im normalen Betriebszustand - die Anschlußklemmen und die elektrische Schaltung von außen nicht zugänglich und somit vor versehentlichem oder unbefugtem Zugriff geschützt.

Innerhalb des äußeren Gehäuses ist weiterhin eine innere Abdeckung vorgesehen, welche die elektrische Schaltung mit Ausnahme der Kabelklemmen und einem zu diesen Kabelklemmen führenden, einen Kabelkanal bildenden Freiraum umschließt.

Bei der Installation oder, wenn die Anschlußbelegung geändert werden soll, braucht dann nur der äußere Gehäusedeckel von der Bodenplatte abgenommen zu werden, so daß die Kabelanschlußklemmen zugänglich sind. Die innere Abdeckung welche bei abgenommendem Gehäusedeckel die beim Ahschluß der Anlage nicht notwendigerweise zugänglich zu haltenden Elemente verschließt, hält dabei diejenigen Bauelemente der elektronischen Schaltung, welche bei unsachgemäßer Handhabung Schaden leiden könnten oder welche elektrische Betätigungselemente aufweisen, die erhöhte Qualifikation bei der Bedienung erfordern, sicher geschützt.

Bei derartigen Anlagen besteht vielfach das Bedürfnis, zusätzliche in Zuleitungen einfügbare Baugruppen vorzusehen, welche für den Betrieb der Anlage erforderlich sind oder aber eine Zubehöreinrichtung bilden. Dabei ist nachteilig, daß diese weiteren Baugruppen jeweils in eigenen Gehäusen zusätzlich neben der eigentlichen Anlage montiert werden müssen.

Der Erfindung liegt die Aufgabe zugrunde, bei einer Telefonanlage der eingangs genannten Gattung mindestens eine Zusatzbaugruppe so anzubringen, daß sie zwar unmittelbar in eine der Anschluß- oder sonstigen Zuleitungen der Anlage geschaltet werden kann, daß sie aber trotzdem nicht unnötigen Raum im räumlichen Bereich in der Nachbarschaft der Befestigung der Anlage - außerhalb derselben - in Anspruch nimmt und insbesondere auch nicht optisch störend in Erscheinung tritt.

Diese Aufgabe wird mit den kennzeichnenden Merkmalen des Anspruchs 1 gelöst.

Die Erfindung schließt ein, daß in der Nachbarschaft eines innerhalb der Anlage vorhandenen Kabelkanals auf dem Wege von einer äußeren Zugangsöffnung zu einer Klemmleiste in günstiger Weise eine Ausnehmung vorgesehen ist, in die die zusätzliche Baugruppe eingefügt ist, deren Zuleitungen in eine ohnehin vorhandene Kabelführung eingeschleift sind, und die sonst außerhalb des Gehäuses der Anlage angebracht sein müßte. Hierbei ist der zusätzliche innere Gehäuseabschluß (Abdeckung) in Form einer weiteren Innenwandung in der Weise vorgesehen, daß die aktive elektronische Komponenten aufweisende Baugruppe eingesetzt und angeschlossen werden kann, ohne daß empfindliche oder spannungsführende Teile durch unqualifizierte Benutzer berührt werden können.

Insbesondere vorteilhaft ist es dabei, wenn der abgesenkte Bereich der Abdeckung den Kabelkanal bildet, wobei sich die Ausnehmung zur Aufnahme der zusätzlichen Baugruppe an den Kabelkanal anschließt und dabei einen weiteren abgesenkten Teilbereich bildet, so daß die Zahl der konstruktiven Ebenen innerhalb der Anlage verringert ist und auch bei abgenommenem Außengehäuse weitgehend glattflächige Bereiche entstehen. Bevorzugt wird hierzu auch durch die zusätzliche Baugruppe der die Ausnehmung zu ihrer Aufnahme bildende abgesenkte Teilbereich im wesentlichen bis zum Niveau des benachbarten, nicht abgesenkten Teilbereichs der inneren Abdeckung aufgefüllt.

Um die Kabelführung zu erleichtern, ist es weiterhin günstig, wenn der abgesenkte Bereich mindestens einen weiteren Teilbereich einschließt, der zusätzlich bis in die Nähe der Bodenplatte der abgesenkt ist.

Insbesondere kann dabei der zur Bodenplatte hin zusätzlich abgesenkte Teilbereich im sich vom Rand der Bodenplatte entfernender Richtung einen zunehmenden Abstand von der Bodenplatte aufweisen und damit eine geneigte Fläche in Form einer ansteigenden Rampe bilden.

Bei einer weiteren günstigen Ausführung bildet die die Anschlüsse aufweisende Außenwandung des Gehäuses der zusätzlichen Baugruppe eine seitliche Begrenzung des Kabelkanals, welche insbesondere an den Kabelkanal in Form einer Wandung anschließt, die die Stirnseite einer Stufe zwischen abgesenktem und nicht abgesenktem Teilbereich erzeugt.

Vorteilhaft ist es weiterhin, wenn der Gehäusedeckel einen sich bis zu seinem Rand erstreckenden Durchlaß für die Leitungen aufweist, wobei dieser Durchlaß insbesondere eine Abdeckung aufweist, die mit Sollbruchstellen versehen sind, welche Durchbrüche für die einzelnen Leitungen begrenzen, die in nicht durchbrochenem Zustand Blindbuchsen bilden.

Eine andere vorteilhafte Weiterbildung der Erfindung besteht darin, daß zwischen Gehäusedeckel und Schaltungsgehäuse oder zwischen Bodenplatte und Gehäusedeckel ein Raum ausgebildet ist, der als ein Kabelvorratsraum nutzbar ist, so daß genügend Raum vorhanden ist, um die notwendige Richtungsänderung der Anschlußkabel vom Ort des Eintritts in das Gehäuse zur Richtung des Anschlußelements hin zuzulassen. Auch kann ohne weiteres eine gewisse Kabelüberlänge gestaut werden, so daß bei künftigen Umrüstungen auf andere Anlagentypen eine Reservelänge des Kabels vorhanden ist und insoweit flexible Anschlußmöglichkeiten gegeben sind.

Auf diese Weise ist es nicht notwendig, bei Verlegung der Anschlußkabel diese exakt zuzumessen, sondern es kann die nicht benötigte Kabellänge in dem Kabelvorratsraum verstaut werden. Es können dann auch konfektionierte Kabel mit Anschlußsteckern und festen Kabellängen vorgesehen werden, wobei dann bevorzugt statt der Kabelklemmen entsprechende Steckeraufnehmer für die über Kabel anzuschließenden Endgeräte vorzusehen sind, so daß für den Anschluß keine weiteren technischen Hilfsmittel benötigt werden.

Gemäß einer anderen vorteilhaften Weiterbildung der Erfindung sind die Kabelklemmen gegenüber der Bodenplatte erhöht angeordnet, so daß sie für den Benutzer zur erleichterten Betätigung bedienungsfreundlich zugänglich sind. Dadurch, daß die innere Abdeckung einen Bereich aufweist, der mindestens teilweise bis in die Nähe der Bodenplatte abgesenkt ist und dieser zur Bodenplatte hin abgesenkte Bereich in der Nähe des Randes der Bodenplatte gelegen ist, besteht eine vorteilhafte Möglichkeit, die Einführung der Kabel dicht benachbart zur Wand, an der die Anlage befestigt ist, vorzunehmen, so daß diese bündig an der Wand anliegend zugeführt werden können.

Wenn weiterhin der zur Bodenplatte hin abgesenkte Bereich in sich vom Rand der Bodenplatte entfernender Richtung einen zunehmenden Abstand von der Bodenplatte aufweist und insbesondere eine geneigte Fläche in Form einer ansteigenden Rampe bildet, besteht die Möglichkeit einer Kabelführung ohne scharfe, diese beschädigende Abwinklungen.

Von Vorteil ist auch, wenn im Gehäusedeckel im Bereich des Durchlasses jeweils Durchbrüche für die einzelnen Leitungen vorgesehen sind, die im nicht durchbrochenen Zustand Blindbuchsen bilden, da dadurch die Telefonanlage keine unnötigen Öffnungen aufweist, die das äußere Erscheinungsbild beeinträchtigen oder Staubablagerungen auf der inneren Abdeckung erleichtern würden. Weiterhin können die Durchbrüche jeweils so ausgebildet sein, daß sie an die Form des tangential ausgerichteten Schlitzes einer das Kabel bezüglich einer in Längsrichtung sperrenden Zugentlastung angepaßt sind, so daß eine versehentlich auf ein Kabel in Längsrichtung wirkende Zugkraft nicht zu Beschädigungen des, im Bereich der Kabelklemmen nicht mehr durch die äußere Ummantelung geschützten Kabels oder der Kabelklemmen führen kann.

Darüber hinaus kann bei einer anderen vorteilhaften Weiterbildung die geneigte Fläche in Form einer Rampe Führungskanäle für die Kabel aufweisen, wofür vorzugsweise schmale auf der geneigten Fläche verlaufende Stege vorgesehen sind, welche die seitlichen Begrenzungen der Führungskanäle bilden. Dadurch wird die Installation der Telefonanlage insoweit erleichtert, als die Verlegerichtung der Kabel zwangsläufig ist und auch in optisch ansprechender Weise vorgenommen werden kann, da ein "Kabelsalat" zwischen den verschiedenen Anschlußkabeln sicher vermieden wird und somit beispielsweise auch eine "Ordnung" der Kabel nach Amts- und Nebenstellenleitungen vorgenommen werden kann.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 ein erstes Ausführungsbeispiel der erfindungsgemäßen Telefonanlage in Draufsicht mit abgenommenem Gehäusedeckel,
Figur 2 das Ausführungsbeispiel gemäß Figur 1 von der Seite her gesehen, welche sich in montiertem Zustand der Anlage unten befindet,
Figur 3 einen Schnitt durch das Ausführungsbeispiel gemäß Figur 1 in montierter Position sowie
Figuren 4a und 4b zwei Blockschaltbilder zu einem Ausführungsbeispiel der Erfindung (Figur 4b) im Vergleich zum Stand der Technik (Figur 4a).

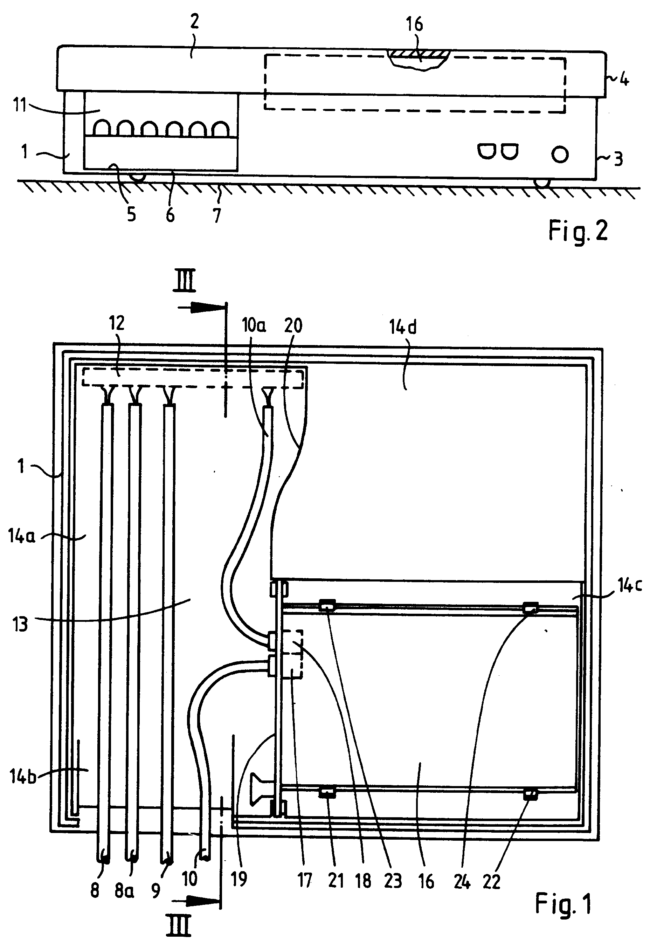

Die in den Figuren 1 bis 3 in verschiedenen Ansichten dargestellte Telefonanlage, die mittels einer entsprechenden Wandhalterung an einer Wand anbringbar ist, weist ein Gehäuse 1 von im wesentlichen Quaderform auf.

Der Gehäusedeckel 2 (Figur 2) besteht aus Kunststoff und ist entsprechend rechteckförmig ausgestaltet und übergreift das Gehäuse im Bereich seiner Kanten mittels entsprechender verkürzter Seitenwandungen 4.

An der in Betriebsstellung bei Wandbefestigung nach unten gerichteten Wandung 3 des Gehäuses 1 ist eine Aussparung 5 vorgesehen, welche sich bis zum Boden 6 des Gehäuses hin erstreckt, die der Wand 7, an der das Gehäuse befestigt ist, unmittelbar benachbart ist. Auf diese Weise können die angeschlossenen Amts-, Nebenstellen- und sonstigen Leitungen (als Leitungen 8, 8a, 9 und 10 in Figur 1 dargestellt) unmittelbar vom Wandniveau her ins Innere der Anlage geführt werden.

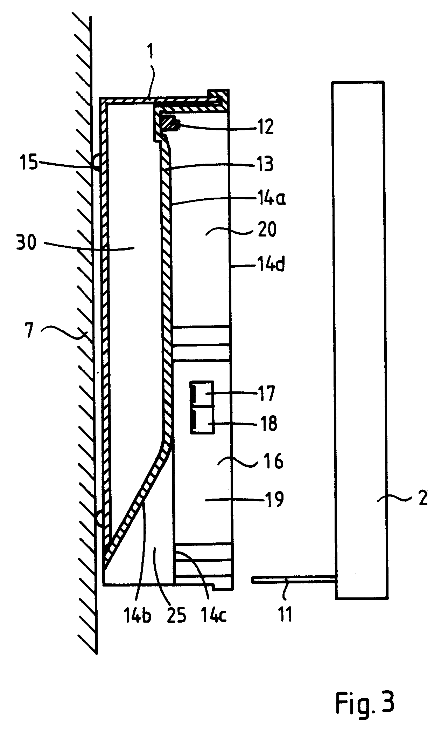

Die Ausparung 5 ist wiederum mindestens teilweise verschlossen durch ein Wandungsteil 11, welches mit dem Deckel 2 verbunden ist (vgl. auch die in Figur 3 dargestellte Seitenansicht) und sich von diesem her in die Aussparung 5 hinein erstreckt. Dabei weist dieser Wandungsteil in einer bevorzugten Ausführung Sollbruchstellen auf, so daß die Abmessungen des Wandungsteils 11 im Bereich seiner freien Kante - und damit die Größe der Aussparung - zu Bildung eines Durchlasses an die Anzahl und den Durchmesser der Leitungen anpaßbar ist.

Es sind für jedes Kabel entsprechende Kabelklemmen 12 vorgesehen, welche die Anschlüsse für den innerhalb der inneren Abdeckung 13 vorgesehenen Elektronikteil der Anlage bilden. (Der für den Elektronikteil vorgesehene Bereich ist in der Schnittdarstellung gemäß Figur 3 zwischen dem Gehäuse 1 und der Abdeckung 13 als Leerraum dargestellt.) Die Kabelklemmen 12 sind in einer Reihe angeordnet, die sich parallel zu der benachbarten Außenwandung des Gehäuses und im Bereich einer Kante der inneren Abdeckung 13 erstreckt.

Die innere Abdeckung 13 ist dabei so ausgebildet, daß sie in einem Bereich 14a bis c im Vergleich zum dem verbleibenden Bereich zur Bodenplatte des Gehäuse 1, d.h. bei an der Wand befestigter Anlage zur Wand 7 hin abgesenkt ist. Ein Bereich 14d ist hingegen nicht abgesenkt und erreicht im wesentlichen das Niveau der Innenwandung des aufgesetzten Gehäusedeckels 2. Die abgesenkten Teilbereiche 14a und 14b dienen dabei der Kabelführung, wobei der abgesenkte Teilbereich 14b eine schiefe Ebene nach Art einer Rampe mit einer Neigung von im wesentlichen 30° bildet. Auf dieser Rampe erreichen die im wesentlichen auf Wandniveau einlaufenden Leitungen 8 bis 10 das gegenüber der Wand 7, an der die Anlage befestigt ist, erhöhte Niveau. Die Kabelklemmen sind im Bereich 14a vorgesehen, der gegenüber dem Niveau des Bereichs 14d nur teilweise abgesenkt ist.

Damit befindet sich im Innern der Anlage zwischen innerer Abdeckung 13 und geschlossenem Gehäusedeckel 2 ein Freiraum, der zur Führung der Kabel dient. Bei abgenommenem Deckel sind die Kabelklemmen ohne weiteres zugänglich und auch leicht erreichbar, da sie sich auf dem erhöhten Niveau der inneren Abdeckung befinden. Der Benutzer ist somit nicht genötigt, zum Anschluß an Anlagenteilen vorbei zu versuchen, die betreffenden Klemmen zu erreichen, was sich beim Stand der Technik insbesondere dann schwierig gestaltet, wenn diese in Aussparungen oder dergleichen gelegen sind.

Bei dem in Figur 3 wiedergegebenen Querschnitt durch das Ausführungsbeispiel der erfindungsgemäßen Telefonanlage in deren linkem Drittel (in Bezug auf die Darstellung gemäß Figur 2) liegt die Bodenplatte des Gehäuses 1 mit flachen Gummifüßen 15 an der Wandfläche 7 an.

Ein an die Telefonanlage 1 anzuschliessendes Kabel wird so verlegt, daß es entlang der die Telefonanlage tragenden Wand 7 durch die entsprechende Öffnung (Ausnehmung 5) in das Gehäuse der Anlage eingeführt wird. Dort gelangt es über die rampenartig geneigte Fläche des abgesenkten Teilbereichs 14b zum dem nur teilweise abgesenkten Teilbereich 14a, der sich im wesentlichen parallel zur Bodenplatte des Gehäuses - und damit zur Wand 7 erstreckt zu den Kabelklemmen 12, die an der von der Eintrittsöffnung 5 entfernt gelegenen Seite des Gehäuses, dieser gegenüberliegend, angeordnet sind, so daß durch die abgesenkten Teilbereiche 14a und 14b ein langgestreckter Kabelführungs- und Stauraum entsteht, in dem einerseits eine im wesentlichen geradlinige Führung der Kabel erfolgen kann, andererseits aber genügend Stauraum zur Verfügung steht, um auch Kabelüberlängen unterzubringen, welche möglicherweise als Reserve benötigt werden.

Vielfach besteht nun das Problem, daß einer derartigen Anlage im Verlauf der Kabelwege noch zusätzliche Baugruppen voran- oder nachzuschalten sind. Hierbei kann es sich um Anschalteinrichtungen für Nebenstellen oder besondere Nebenstelleneinrichtungen bei einzelnen Telefonapparaten, wie beispielweise Parallelsteckdosen für Telefax-Geräte etc. handeln. Bisher mußten diese Zusatzeinrichtungen außerhalb des Gehäuses der Fernsprechanlage montiert werden oder waren, wenn sie innerhalb der Anlage montiert, d.h. in die Anlage integriert waren, schwer erreichbar.

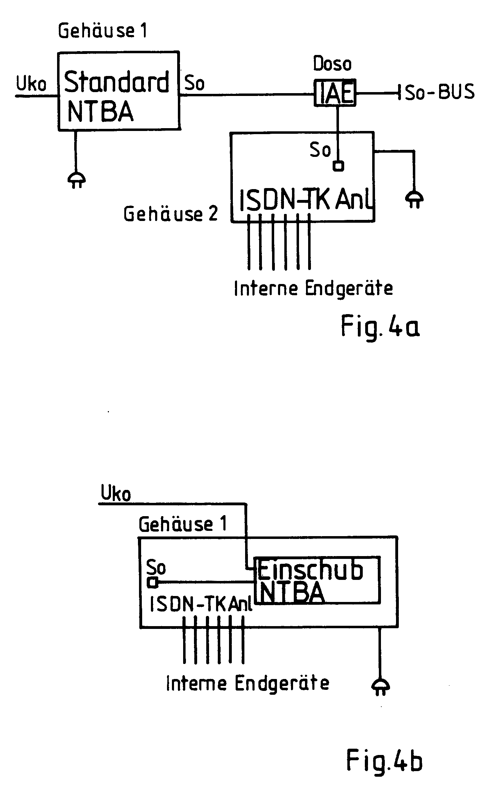

Bei der in Figur 4a in Blockschaltung wiedergegebenen Ausführung nach dem Stand der Technik bei einer ISDN-TK-Anlage mit Anschlüssen für interne Endgeräte ein Anschluß für die Sₒ-Bus-Schnittstelle als 4-Draht-Verbindung in Richtung Amt vorgesehen. Diese Anlage weist einen zusätzlichen Netzanschluß auf. Die Leitungsführung erfolgt über eine normgerechte externe IAE-Wanddose und führt zu einer getrennten Anschalteinheit, welche ein Standard-NTBA-Netzabchlußterminal bildet und mittels einer Zweidrahtleitung mit dem Amt verbunden ist. Dieses Anschlußterminal ist ebenfalls mit einem Netzanschluß versehen und in einem getrennten Gehäuse zur Wandbefestigung vorgesehen. Damit bestehen bei dieser Ausführung drei Wandgehäuse nebeneinander, welche entsprechenden Platz einnehmen.

Demgegenüber ist bei der erfindungsgemäßen Lösung, wie sie in Figur 4b im einzelnen dargestellt ist, die aktive elektronische Bauelemente enthaltende Anschalteinheit als NTBA-Einschub innerhalb des Gehäuses der Nebenstellenanlage vorgesehen. Damit reduziert sich sowohl die Anzahl der Gehäuse als auch diejenige der Netzanschlußleitungen auf je eine. Eine separate IAE-Dose ist ebenfalls nicht erforderlich.

Wie in den Figuren 1 bis 3 dargestellt ist, ist die hier wiedergegebenen Telefonanlage mit einer auf der inneren Abdeckung 13 - aber innerhalb des äußeren - Gehäusedeckels 1 mit einer ein quaderförmiges Gehäuse aufweisenden Baugruppe 16 versehen, welche in die Amtsleitung 10 eingefügt ist. Der Leitungsteil 10 führt dabei als 2- adriger Ukₒ₋-Kanal durch die Ausnehmung 5 nach außen, während der Leitungsteil 10a als 2-adriger So-Kanal ausgebildet und mit der Klemmleiste 12 verbunden ist. Die Leitungsteile 10 und 10a sind mit der Baugruppe 16 über sogenannte "Western-Stecker" verbunden, während die Adern des anderen Endes des Leitungsteils 10a einzeln mit den ensprechenden - nicht näher dargestellten - Klemmkontakten der Klemmleiste 12 verbunden sind.

Die Baugruppe 16 ist in einem ebenfalls abgesenkten Bereich 14c der inneren Abdeckung vorgesehen, welcher mit dem Kabelkanal (abgesenkte Bereiche 14a bzw. 14b in Durchlaßverbindung steht. Die Baugruppe 16 füllt den eine Ausnehmung zu seiner Aufnahme bildenden abgesenkten Teilbereich 14c im wesentlichen aus, so daß damit das Niveau des nicht abgesenkten Bereichs 14d erreicht wird, der das Innere des Gehäuses 1 bei aufgesetztem Deckel im wesentlichen ausfüllt. Der abgesenkte Bereich 14a, der der Führung der Kabel dient, verbreitert sich zu den Anschlußklemmen 12 hin, so daß dort ein erweiterter Arbeits- und Staubereich zur Verfügung steht. Damit entsteht bei eingesetzter Baugruppe 16 ein Kabelkanal, der sich auf den abgesenkten Bereich 14a und den zusätzlich abgesenkten rampenartigen Bereich 14b beschränkt. Die Anschlüsse 17 und 18 aufweisende Stirnfläche 19 der zusätzlichen Baugruppe bildet damit einen Teil der seitlichen Begrenzung des so entstandenen Kabelkanals, so daß diese Anschlüsse im Verlauf der Kabelführung von außen in das Gehäuse 1 der Anlage zur Klemmleiste 12 hin zwangsläufig passiert werden. Die seitliche Begrenzung wird fortgesetzt durch eine Wandung 20, welche die Stirnfläche einer Stufe zwischen dem abgesenkten Teilbereich 14a und dem nicht abgesenkten Bereich 14d bildet.

Die Baugruppe wird gehalten von Befestigungselementen 21 bis 24, welche in Form von Rastnasen oder sonstigen Arretierungsmitteln ausgebildet sein können bzw. als Krallen seitlich an der Baugruppe 16 vorgesehene Führungsschienen übergreifen, und diese somit auf dem mit dem abgesenkten Teilbereich 14a/14b in Durchlaßverbindung stehenden abgesenkten Teilbereich 14c festhalten. Anstelle der Krallen 21 bis 24 können auch andere geeignete Arretierungs- oder Führungsmittel vorgesehen sein, welche die Baugruppe 16 in ihrer Position fixieren.

Auf diese Weise können sämtliche Anschlußarbeiten bei abgenommenem Gehäusedeckel eins vorgenommen werden, ohne daß in das "Innere" der Anlage unterhalb der Abdeckung 13 eingegriffen werden müßte. Dabei sind durch Auswahl und Einfügung unterschiedlicher, dem jeweiligen Anwendungszweck angepaßte Baugruppen, auch grunsätzliche Umstellungen hinsichtlich der Funktionsmerkmale der Anlagen durch Veränderungen im Zuleitungsbereich ausführbar.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Fernsprechnebenstellenanlage mit Kabelklemmen (12) oder sonstigen Verbindungsmitteln zum Anschluß von ein oder mehreren Amts- bzw. Nebenstellenleitungen, mit einer zusätzlichen, in die Amts-, Nebenstellen- oder sonstige äußere Leitung einschaltbaren Baugruppe (16) und einem Gehäuse (1), wobei
das Gehäuse eine Bodenplatte (6) als Wandhalterung und einen Gehäusedeckel (2) aufweist, welche zusammengenommen die elektrische Schaltung und die Kabelklemmen (12) umschließen,
eine zusätzliche, mindestens teilweise innerhalb des Gehäusedeckels (2) angeordnete Abdeckung (13) vorgesehen ist, welche die elektrische Schaltung der Anlage mit Ausnahme der Kabelklemmen abdeckt und zwischen Gehäusedeckel und innerer Abdeckung einen einen Zugang zu den Kabelklemmen bildenden Zwischenraum verbleiben läßt, der einen Kabelführung- oder -vorratsraum in Form eines Kabelkanals bildet,
die Abdeckung (13) eine mit Aufnahme- und Befestigungsmitteln für die zusätzliche Baugruppe (16) versehene Ausnehmung (14c) vorsieht und dort eine beim Einsetzen und elektrischen Anschließen der zusätzlichen Baugruppe (16) vor Berührung empfindlicher oder spannungsführender Teile schützende Innenwand (14b) bildet,
diese zusätzliche Baugruppe (16) mit einem eine weitere elektrische Schaltung umschließenden Gehäuse versehen ist und daran vorgesehene Kabelklemmen oder sonstige Verbindungsmittel (17, 18) zum Kabelkanal hin weisend angeordnet sind.

2. Fernsprechnebenstellenanlage nach Anspruch 1, **dadurch gekennzeichnet,** daß ein abgesenkter Bereich (14a und 14b) der Abdeckung (13) den Kabelkanal bildet, wobei sich die Ausnehmung zur Aufnahme der zusätzlichen Baugruppe an den Kabelkanal anschließt und dabei einen weiteren abgesenkten Teilbereich (14c) bildet.

3. Fernsprechnebenstellenanlage nach einem der vorangehenden Ansprüche, **dadurch gekennzeichnet,** daß der abgesenkte Bereich mindestens einen weiteren Teilbereich (14b) einschließt, der zusätzlich bis in die Nähe des wandnahen Bereichs des Gehäuses (1) abgesenkt ist.

4. Fernsprechnebenstellenanlage nach Anspruch 3, **dadurch gekennzeichnet,** daß der zusätzlich abgesenkte Teilbereich (14b) in sich vom Rand der Bodenplatte (6) entfernender Richtung einen zunehmenden Abstand vom wandnahen Bereich des Gehäuses (1) aufweist und damit eine geneigte Fläche in Form einer ansteigenden Rampe bildet.

5. Fernsprechnebenstellenanlage nach einem der vorangehenden Ansprüche, **dadurch gekennzeichnet,** daß die zusätzliche Baugruppe (16) den die Ausnehmung zu ihrer Aufnahme bildenden abgesenkten Teilbereich im wesentlichen bis zum Niveau eines nicht abgesenkten Teilbereichs der Abdeckung (13) auffüllt.

6. Fernsprechnebenstellenanlage nach Anspruch 5, **dadurch gekennzeichnet,** daß die die Anschlüsse (17, 18) aufweisende Seite (19) des Gehäuses der zusätzlichen Baugruppe (16) eine seitliche Begrenzung des Kabelkanals bildet, welche insbesondere an eine Wandung (20) anschließt, die die Stirnseite einer Stufe zwischen abgesenktem (14a) und nicht abgesenktem (14d) Teilbereich bildet.

7. Fernsprechnebenstellenanlage nach einem der vorangehenden Ansprüche, **dadurch gekennzeichnet,** daß der Gehäusedeckel (2) einen sich bis zu seinem Rand erstreckenden Durchlaß (5) für die Leitungen aufweist, wobei der Durchlaß insbesondere eine teilweise Abdeckung (11) aufweist, die mit mindestens einer Sollbruchstelle versehen ist, welche Durchbrüche für die einzelnen Leitungen begrenzt, die in nicht durchbrochenem Zustand Blindbuchsen bilden.

8. Fernsprechnebenstellenanlage nach einem der vorangehenden Ansprüche, **dadurch gekennzeichnet,** daß es sich bei der zusätzlichen Baugruppe um ein Anschlußgerät (NTBA) für das ISDN-System handelt.

9. Fernsprechnebenstellenanlage nach einem der vorangehenden Ansprüche, **dadurch gekennzeichnet,** daß die Aufnahme- oder Befestigungsmittel aus Führungsschienen, Anschlägen, Rastnasen und/oder einer schachtartigen Ausnehmung bestehen.

10. Fernsprechnebenstellenanlage nach einem der vorangehenden Ansprüche, **dadurch gekennzeichnet,** daß das Gehäuse der zusätzlichen Baugruppe (16) quaderförmig ausgebildet ist, wobei sich die größeren Seitenflächen parallel zur inneren Abdeckung erstrecken.

11. Fernsprechnebenstellenanlage nach einem der vorangehenden Ansprüche, **dadurch gekennzeichnet,** daß die Verbindungsmittel (17, 18) der zusätzlichen Baugruppe als Kabelklemmen oder Steckverbindungen ausgebildet sind.

## Claims

1. A private branch exchange having cable clamps (12) or other connecting means for one or a plurality of exchange or private branch exchange line, having an additional assembly (16) which can be connected to the exchange, private branch exchange or other outside line, and a housing (1) where
the housing has a base plate (6) as a wall mounting support and a housing cover (2), which taken together, encompass the electrical circuit and the cable clamps (12),
an additional covering (13) is provided, which is arranged at least partially inside housing cover (2), which covers the electrical circuit of the exchange with the exception of the cable clamps, and allows an intermediate space to remain between the housing cover and the inner covering, forming an entrance to the cable clamps, which forms a cable guide or storage space in the form of a cable channel,
the covering (13) has a recess (14c) provided with receiving and securing means for the additional assembly (16), and on the insertion and electrical connection of the additional assembly (16), forms there an inner wall (14b) which is a protection from contact-sensitive or voltage-carrying parts,
this additional assembly (16) is provided with a housing enveloping a further electrical circuit, and cable clamps or other connecting means (17,18) provided thereon are arranged pointing towards the cable channel.

2. A private branch exchange according to claim 1, characterised in that a sunken area (14a & 14b) and the covering (13) form the cable channel, where the recess for incorporating the additional assembly joins the cable channel and thus forms a further partial sunken area (14c).

3. A private branch exchange according to any of the above claims, characterised in that the sunken area incorporates at least a further partial area (14b) which additionally is sunken as far as the area in the vicinity of the housing (1) area close to the wall.

4. A private branch exchange according to claim 3, characterised in that the additional partial sunken area (14b) exhibits an increasing separation from the housing (1) area close to the wall in the direction removed from the edge of base plate (6) and thus forms an inclined surface in the form of an ascending ramp.

5. A private branch exchange according to any of the above claims, characterised in that the additional assembly (16) fills the partial sunken area forming the recess for receiving it, essentially as far as the level of a partial non-sunken area of the covering (13).

6. A private branch exchange according to claim 5, characterised in that side (19) of the housing of the additional assembly (16) bearing the connections (17,18), forms a lateral boundary for the cable channel, which in particular adjoins a wall which forms the end-side of a step between the partial sunken area (14a) and non-sunken area (14d).

7. A private branch exchange according to any of the above claims, characterised in that housing cover (2) has a passage (5) for the lines which extend to its edge, and where the passage in particular has a partial covering (11) which is provided with at least a pre-determined breaking point, which limits break-throughs for the individual lines, which form dummy sockets in the non-broken-through state.

8. A private branch exchange according to any of the above claims, characterised in that with the additional assembly one is concerned with a connecting apparatus (NTBA) for the ISDN - system.

9. A private branch exchange according to any of the above claims, characterised in that the receiving and securing means are comprised of guide rails, stops, latches and/or shaft-like recesses.

10. A private branch exchange according to any of the above claims, characterised in that the housing of the additional assembly (16) is constructed parallelepide-shaped, and where the larger side surfaces extend to the inner covering.

11. A private branch exchange according to any of the above claims, characterised in that the connecting means (17,18) of the additional assembly are constructed as cable clamps or plug-in connections.

## Revendications

1. Installation téléphonique privée comportant des bornes (12) pour câbles ou d'autres moyens de liaison pour le raccordement d'une ou de plusieurs lignes arrivant du central ou de postes supplémentaires, comportant un module supplémentaire (16), qui peut être branché dans la ligne du central, dans la ligne d'un poste supplémentaire ou d'une autre ligne extérieure, et un boîtier (1), dans laquelle
le boîtier comporte une plaque de base (6) en tant que support de paroi et un couvercle (2), qui à l'état assemblé renferme le circuit électrique et les bornes (12) pour câbles,
il est prévu un élément de recouvrement supplémentaire (13), qui est disposé au moins en partie à l'intérieur du couvercle (2) du boîtier et recouvre le circuit électrique de l'installation à l'exception des bornes pour câbles, et laisse subsister entre le couvercle du boîtier et son élément de recouvrement intérieur, un espace intercalaire qui permet l'accès aux bornes pour câbles et forme un espace de guidage ou de réserve pour câbles, sous la forme d'un conduit à câbles,
l'élément de recouvrement comporte un évidement (14c), qui est équipé de moyens de réception et de fixation pour le module supplémentaire (16) et forme en cet endroit une paroi intérieure (14b) qui fournit une protection lors de l'insertion et du raccordement électrique du module supplémentaire (16) vis-à-vis d'un contact avec des pièces sensibles ou placées sous tension,
ce module supplémentaire (16) est équipé d'un boîtier qui enveloppe un autre circuit électrique, et des bornes pour câbles prévues sur ce module ainsi que d'autres moyens de liaison (17,18) sont disposés de manière à être tournés vers le conduit à câbles.

2. Installation téléphonique privée selon la revendication 1, caractérisée en ce qu'une partie en renfoncement (14a et 14b) de l'élément de recouvrement (13) forme le conduit à câbles, l'évidement servant à loger le module supplémentaire se raccordant au conduit à câbles et formant une autre partie en renfoncement (14c).

3. Installation téléphonique privée selon l'une des revendications précédentes, caractérisée en ce que la partie en renfoncement inclut au moins une autre partie (14b), qui est en supplément en renfoncement jusqu'à proximité de la partie, proche de la paroi, du boîtier (1).

4. Installation téléphonique privée selon la revendication 3, caractérisée en ce que la distance de la partie (14b) qui est de façon supplémentaire en renfoncement par rapport à la partie du boîtier (1), proche de la paroi, augmente au fur et à mesure que la distance par rapport au bord de la plaque de base (6) augmente, et que cette partie en renfoncement de façon supplémentaire forme une surface inclinée sous la forme d'une rampe montante.

5. Installation téléphonique privée selon l'une des revendications précédentes, caractérisée en ce que le module supplémentaire (16) remplit la partie en renfoncement, qui forme l'évidement pour son logement, essentiellement jusqu'au niveau d'une partie non en renfoncement de l'élément de recouvrement (13).

6. Installation téléphonique privée selon la revendication 5, caractérisée en ce que le côté (19), qui comporte les bornes (17,18), du boîtier du module supplémentaire (16) forme une limitation latérale du conduit à câbles, qui se raccorde notamment à une paroi (20), qui forme la face frontale d'une partie étagée entre la partie en renfoncement (14a) et la partie non en renfoncement (14b).

7. Installation téléphonique privée selon l'une des revendications précédentes, caractérisée en ce que le couvercle (2) du boîtier possède un passage traversant (5) pour les lignes, qui s'étend jusqu'à son bord, le passage traversant possédant notamment un élément de recouvrement partiel (11), qui comporte au moins un point de rupture de consigne, qui limite des passages traversants pour les différentes lignes, qui forment des douilles aveugles, dans l'état non perforé.

8. Installation téléphonique privée selon l'une des revendications précédentes, caractérisée en ce qu'en ce qui concerne le module supplémentaire, il s'agit d'un appareil de raccordement (LTB1) pour le système ISDN.

9. Installation téléphonique privée selon l'une des revendications précédentes, caractérisée en ce que les moyens de réception ou de fixation sont constitués par des rails de guidage, des butées, des becs d'encliquetage et/ou un évidement en forme de puits.

10. Installation téléphonique privée selon l'une des revendications précédentes, caractérisée en ce que le boîtier du module supplémentaire (16) est réalisé avec une forme parallélépipédique, les parois latérales les plus grandes s'étendant parallèlement à l'élément de recouvrement intérieur.

11. Installation téléphonique privée selon l'une des revendications précédentes, caractérisée en ce que les moyens de liaison (17,18) du module supplémentaire sont agencés sous la forme de bornes pour câbles ou de connecteurs.
